# EUROPEAN PATENT APPLICATION

(11) **EP 0 654 499 A2**
(43) Date of publication of application: **24.05.1995**
(21) Application number: 94117925.1
(22) Date of filing: 14.11.1994
(51) Int. Cl.: C08L 9/00, B60C 1/00

(54) **Tire with tread**

(30) Priority: 24.11.1993 US 158651
(71) Applicant: THE GOODYEAR TIRE & RUBBER COMPANY, Akron, Ohio 44316-0001 (US)
(72) Inventor: Thise, Ghislain Adolphe Leon, B-6600 Wardin (BE); Fourgon, Fernand Antoine Joseph, B-6600 Bastogne (BE)
(74) Representative: Leitz, Paul

(57) **Abstract**

Pneumatic rubber tire with a rubber tread composition of isoprene/butadiene copolymer rubber, cis 1,4-polyisoprene rubber which may also contain a specified styrene/butadiene copolymer rubber.

## Description

### Field

This invention relates to a pneumatic rubber tire having a rubber tread of a specified rubber composition.

### Background

Pneumatic rubber tires are conventionally prepared with a rubber tread. Such tread is often composed of a blend of rubbers.

In one aspect, it may be desired for the rubber composite for the tread to be designed to enhance properties such as treadwear of the tire without unduly sacrificing the tire's traction (skid resistance). Such often desirable aspect is usually difficult to obtain with a single tread rubber compound.

Thus, in one aspect, it is desired to enhance a tire's treadwear while maintaining, or substantially maintaining, its wet skid property.

In another aspect, the rubber composite for the tread, particularly for truck tires, may be desirably designed for good treadwear for longevity of the tire, for a cooler running temperature of the tire in its tread region, also for enhancing the longevity of the tire and for reduced groove cracking, also for enhancing the longevity of the tire.

Truck tires are normally expected to endure heavier loads than passenger tires. Truck tires, under their heavier loads, may run hotter than passenger tires.

Such higher running temperatures are typically an evidence of greater heat being generated within the tire and also reflective of the efficiency of the rubber, in the tread region for instance, in dissipating the heat. Heat generated in a tire, as evidenced by a higher running temperature, particularly under load, is recognized as a factor which ages a tire because of compound reversion and degradation. Thus, a truck tire with lower running temperature is desirable.

Thus, in another aspect, it is some times desirable to reduce or at least maintain the rib tear characteristic of the truck tire while reducing its groove cracking and running temperature.

Pneumatic rubber tires have been manufactured with treads composed of butadiene/styrene copolymer (SBR), natural rubber and cis 1,4-polybutadiene rubber for various purposes where the butadiene/styrene rubber contained about 20-25 percent styrene and tires having treads of SBR having a styrene content of 30-35 percent and cis 1,4-polyisoprene rubber have been disclosed. For example, such tread might be composed of, based on 100 parts by weight of the rubber component, about 50 parts butadiene/styrene copolymer (SBR) containing about 20-25 percent styrene, about 25 parts natural cis 1,4-polyisoprene and about 25 parts cis 1,4-polybutadiene.

While it is recognized that various tires have heretofore been provided, or proposed, with rubber tread composed of various rubbers, including styrene/butadiene copolymer rubbers (SBR), cis 1,4-polyisoprene (including natural rubber, cis 1,4-polybutadiene rubber and, probably isoprene/butadiene rubber, it is desired to provide a tire with a rubber tread of novel composition, or novel blend of rubbers, designed to enhance a truck tire's treadwear and running temperature, at least in its tread region.

### Disclosure and Practice of the Invention

In accordance with this invention, a pneumatic rubber tire is provided having a rubber tread where said tread rubber is comprised of, based on 100 parts by weight of the tread rubber, (A) about 20 to about 70 parts by weight (phr) isoprene/butadiene copolymer rubber having an isoprene content of about 40 to about 60 percent; (B) about 10 to about 80 (phr) cis 1,4-polyisoprene rubber; and (C) up to about 30 phr of an organic solution polymerization prepared styrene/butadiene copolymer rubber (S-SBR) having a styrene content of about 15 to about 25 percent wherein the isoprene/butadiene copolymer rubber is characterized by having a glass transition temperature (Tg) in a range of about -60°C to about -90°C and, further, by its butadiene component having a vinyl content in a range of about 1 to about 10 percent, based on the butadiene, and by its isoprene component having a 3,4-content in a range of about 1 to about 10 percent based on the isoprene.

Preferably, the cis 1,4-polyisoprene rubber is natural rubber (NR).

In further accordance with this invention, with a view toward a tire with a rubber tread with good treadwear and traction, or skid resistance, a pneumatic tire is provided having a rubber tread, where said tread rubber is comprised of, based on 100 parts by weight tread rubber, (A) about 20 to about 40 phr of said isoprene/butadiene copolymer rubber, and (B) about 60 to about 80 phr of cis 1,4-polyisoprene natural rubber.

In additional accordance with this invention, with a view toward a tire with a rubber tread with good (relatively low) normal running temperature and preferably acceptable groove cracking for a truck-type tire, a tire is provided with a rubber tread, where said tread rubber is comprised of, based on 100 parts by weight rubber, (A) about 40 to about 70 phr of said isoprene/butadiene copolymer rubber, (B) about 20 to about 30 phr of said S-SBR, and (C) up to about 40, preferably about 10 to about 40, phr of cis 1,4-polyisoprene natural rubber.

The Tg represents the glass transition temperature of the respective rubbers in their uncured, uncompounded state. It can be determined by a differential scanning calorimeter at a rate of 1°C per minute.

It is considered herein that the utilization of the isoprene/butadiene copolymer rubber in place of a portion of a combination of styrene/butadiene copolymer rubber (SBR) and 1,4-polyisoprene rubber is a departure from such past practice.

It is considered herein that the isoprene/butadiene copolymer (sometimes referred to herein as S-IBR) tends to fill a property gap between the utilization of a combination SBR and cis 1,4-polyisoprene natural rubber in a tire tread by promoting an improved treadwear without losing in wet skid resistance and maintaining a low tire running temperature.

Indeed, for the purposes of this invention, the S-IBR, basically, is utilized in place of a combination of SBR and NR to provide a tread as a blend of S-IBR and NR.

It is required herein that the isoprene/butadiene copolymer rubber is prepared by organic solution polymerization instead of by aqueous emulsion polymerization because it is considered herein that the S-IBR microstructure (namely, the 3,4-isoprene and vinyl butadiene contents) is preferable. This is because of the hereinafter described effect of the 3,4-isoprene and vinyl butadiene contents on the Tg of the S-IBR elastomer.

For example, an increase in isoprene content would be expected to increase the polymer's Tg; an increase in the 3,4-content of the isoprene would be expected to increase the polymer's Tg; an increase in the vinyl content of the polybutadiene would be expected to increase the polymer's Tg. Typically, the 3,4- content of the isoprene would be in a range of about 1 to about 10 percent, based on the isoprene and the vinyl content of the butadiene would be in a range of about 1 to about 10 percent, based on the butadiene.

Utilization of the isoprene/butadiene copolymer rubber with the required Tg range and, thus, 3,4-isoprene and vinyl butadiene contents, is considered to be important to provide low heat generation, flex properties and high treadwear for the tire tread. It is required that it be derived from solution polymerization (in the presence of an organic hydrocarbon solvent) instead of an emulsion (water based) polymerization because of better control on polymer microstructure.

For the S-IBR, as considered herein, a representative 3,4-isoprene content (based on the isoprene content of the S-SBR) is in a range of about 1 to about 10 percent and a representative vinyl content (based on the butadiene portion of the S-SBR) is in a range of about 2 to about 10 percent. A representative of a total of said 3,4-isoprene and vinyl contents is in a range of about 3 to about 8.

Utilization of the isoprene/butadiene copolymer rubber with the prescribed Tg is considered to aid in providing the tire with good treadwear and wet skid resistance because of the viscoelastic properties of such polymer.

Thus, in the practice of this invention, as hereinbefore described, the isoprene/butadiene copolymer rubber, with its required Tg range of about -60°C to about -90°C, is further characterized by (i) the isoprene content in the copolymer, and (ii) the level, or content of the 3,4-structure in the isoprene, and (iii) the vinyl (1,2-) content in the butadiene. A balance of (i), (ii) and (iii) is utilized to arrive at the required Tg range for the copolymer rubber.

The addition of the cis 1,4-polyisoprene (natural rubber) is considered important to contribute to tear resistance for the tread.

Utilization of the styrene/butadiene copolymer rubber, derived by organic solution polymerization, (referred to herein as S-SBR), with its required bound styrene content, is important to aid in providing traction for the tire tread as well as aiding in reducing heat generation in the tire tread.

It is readily understood by those having skill in the art that the rubber compositions of the tread would be compounded with conventional compounding ingredients such as carbon black, silica, antidegradants, processing oil, stearate acid or a zinc stearate, zinc oxide, sulfur-providing materials and accelerators therefor.

Such compounding of rubber is well known to those having skill in such art. Antidegradants are typically of the amine or phenolic type while stearic acid is typically referred to as a rubber compounding ingredient, it may be pointed out that the ingredient itself is usually obtained and used as a mixture of organic acids primarily composed of stearic acid with at least one of oleic acid, linolenic acid and palmitolic and/or palmitic acid. The mixture may contain minor amounts (less than about six weight percent) of myristic acid, arachidic acid and/or arachidonic acid. Such material or mixture is conventionally referred to in the rubber compounding art as stearic acid.

Where normal or typical rubber compounding amounts or ranges of amounts of such additives are used, they are not otherwise considered as a part of the invention. For example, some of the ingredients might be classified, in one aspect, as processing aids. Such processing aids may be, for example, rubber processing oil such as paraffinic, napthenic and aromatic processing oils typically used in the range of about 2 to about 10 phr; waxes such as microcrystalline and paraffinic waxes typically used in a range of about 1-5 phr and often in a range of about 1 to about 3 phr; and resins, usually as tackifiers, such as, for example, synthetic hydrocarbon and natural resins typically used in a range of about 1-5 phr and often in a range of about 1 to about 3 phr. A curative might be classified as a combination of sulfur and sulfur cure accelerator(s) for the rubber compound (usually simply referred to as accelerator) or a sulfur donor/accelerator. In a sulfur and accelerator(s) curative, the amount of sulfur used is in a range of about 0.5 to 5 phr and usually in a range of about 0.5 to about 3 phr; and the accelerator(s), often of the sulfenamide type, is (are) used in a range of about 0.5 to about 3 phr and often in a range of about 1 to about 2 phr. The term "phr" refers to parts by weight of the referenced ingredient per one hundred parts by weight of rubber in the rubber composition. Such term is commonly used in the rubber compounding art.

After mixing, the compounded rubber can be fabricated into a tire tread and cured under conditions of heat and pressure by methods well-known to those having skill in such art.

The prepared tire of this invention is conventionally shaped and cured by methods known to those having skill in such art.

The invention may be better understood by reference to the following example in which the parts and percentages are by weight unless otherwise indicated.

### EXAMPLE I

Mixtures of diene rubbers, including one mixture with isoprene/butadiene copolymer rubber, (S-IBR), were prepared comprised of the following recipe shown in Table 1 as Experiments A, B and C. Experiment A is considered a control.

**Table 1**

| | Parts | | |
|---|---|---|---|
| Material | Exp A (Control) | Exp B | Exp C |
| Natural Rubber (cis 1,4-polyisoprene) | 100 | 75 | 60 |
| Isoprene/Butadiene Rubber¹ | 0 | 25 | 40 |
| Carbon Black | 50 | 50 | 50 |
| Processing Oil (Paraffinic) | 2.50 | 2.50 | 2.50 |

Conventional, preferred, amounts of antidegradant(s) (para-phenylene diamine type), tackifying resin, fatty acid, zinc oxide, peptizer, sulfur and accelerator of the sulfenamide type were used.
1. An isoprene/butadiene copolymer rubber - characterized by reportedly having an isoprene content of about 50 percent, and a Tg of about -88°C, wherein its isoprene component had a 3,4 content of about 1.5 percent and its butadiene component had a vinyl content of about 0.6 content.

### EXAMPLE II

The prepared rubber compositions were cured at a temperature of about 150°C for about 32 minutes and the resulting cured rubber samples evaluated for their physical properties (rounded numbers are reported herein) as shown in the following Table 2. The samples A, B and C correspond to the experimental samples A, B and C of Example I.

**Table 2**

| Properties | Ex. A (Control) | Ex. B | Ex. C |
|---|---|---|---|
| Tan.Delta 0°C¹ | 0.26 | 0.25 | 0.24 |
| Tan.Delta 100°C¹ | 0.15 | 0.14 | 0.14 |
| Rebound³ (%) at 100°C (Zwick) | 63 | 66 | 72 |
| Tear (Strebler Adhesion)⁴(N) at 100°C | 33 | 23 | 9 |
| 300% Modulus MPA | 14.0 | 13.0 | 16.0 |
| Hardness Shore A | 65 | 65 | 65 |

1. Measured on a Viscoanalyser instrument at 7.8 Hz and 5% shear - The instrument is obtained from the Metravib company as machine model No. RAC 815 A. It is an instrument used to dynamically test or evaluate viscoelastic properties of cured rubber.

Observation of the physical properties of the rubber composite shows that compound B will provide a cooler running tire at equal wet skid resistance.

### EXAMPLE III

Tires were prepared with rubber treads of the rubber composition of Exp. A and B of Example I. The tires are tested with the following results normalized to 100 for the control tire (Ex. A) in the following Table 3.

**Table 3**

| | Tire | |
|---|---|---|
| Property | Ex. A (Control) | Ex. B |
| Treadwear | 100 | 108 |
| Wet Skid Resistance | 100 | 103 |
| Running Temperature | 100 | 97 |

The treadwear is determined by a truck tire tread test where the tire is mounted on a rim and run under specified tire service conditions for its supporting rim, inflation and truck axle load. A higher reported value means a better tire performance. The mileage, or distance, to wear one millimeter of tread groove depth of the experimental and control tires is evaluated. The value for the control tire is provided herein as normalized to a value of 100. The value presented herein for the experimental tire is determined by multiplying the ratio of the average value for the experimental tire over the value for the control tire and the resulting number multiplied by 100 to obtain the treadwear rating for the experimental tire. A higher reported value means a better tire performance.

The wet skid resistance (traction) is determined by the braking distance on wet concrete and asphalt surfaces with and a higher value means better tire performance. The tires were mounted on rims and inflated to a pressure as recommended by the European Tyre And Rim Technical Organization (ETRTO), and run on a vehicle under an axle load as recommended by ETRTO.

The running temperature value is determined by measuring the tire tread's temperature after the tire has been run at a speed of about 80 Km/h under ETRTO specified truck axle load, rim and tire inflation conditions. A lower value means better tire performance.

Thus, the tire tests show that isoprene/butadiene polymer provides a superior treadwear and a cooler running tire while maintaining wet skid resistance, as compared to the control.

### EXAMPLE IV

Mixtures of isoprene/butadiene copolymer rubber, styrene/butadiene copolymer rubber and, optionally, cis 1,4-polybutadiene rubber were prepared comprised of the rubbers, carbon black and processing oil shown in Table 1 as Experiments D-G with Exp. G being a control in a sense that it is composed of natural rubber and polybutadiene rubber(s).

**Table 4**

| | Parts | | | |
|---|---|---|---|---|
| Material | Exp D | Exp E | Exp F | Exp G (Control) |
| Polybutadiene | | | | 30 |
| Isoprene/Butadiene Rubber¹ | 43 | | | |
| Natural Rubber² | 37 | | | 70 |
| Solution Styrene/Butadiene Rubber³ | 20 | | | |
| Carbon Black | 47 | | | 50.5 |
| Processing Oil (Aromatic) | 3 | | | 7 |

1. Isoprene/butadiene rubber containing about 50% isoprene and having a 3,4-isoprene content of 1.5% based on the isoprene, a vinyl butadiene content of about 0.6% based on the butadiene and a Tg of about -88°C.
2. Natural rubber (cis 1,4-polyisoprene) having a Tg of about -70°C.
3. Solution styrene/butadiene copolymer rubber containing 18% styrene and a Tg of about -75°C.

The compounded rubber also contained conventional amounts of antidegradant of the paraphenylene diamine type, stearic acid, zinc oxide, sulfur and accelerator of the sulfenamide type.

### EXAMPLE V

The prepared rubber compositions were cured at a temperature of about 150°C for about 18 minutes and the resulting cured rubber samples evaluated for their physical properties (rounded numbers) as shown in the following Table 5. The experimental samples D-G correspond to the experimental samples D-G of Example IV.

**Table 5**

| Properties | Ex. D | Ex. E | Ex. F | Ex. G Control |
|---|---|---|---|---|
| Tensile Strength (MPa) | 22.3 | | | 24 |
| Modulus (300%) (MPa) | 11 | | | 10.5 |
| Elongation (%) | 495 | | | 585 |
| Dynamic Modulus (25°C) | 6.9 | | | 4.5 |
| Dynamic Modulus (100°C) | 4.8 | | | 3.5 |
| Tan Delta (25°C) | 0.05 | | | 0.07 |
| Tan Delta (100°C) | 0.04 | | | 0.05 |
| Belt Flex Test (Hours to Failure) | 1200 | | | 500 |

The belt flex test is considered herein to be indicative of a rubber compound's resistance to cracking under flexing conditions. The belt flex test is conducted by running a belt composed of the rubber compound to be tested on pulleys of different diameters to simulate various flexing conditions. The time to failure of the belt is recorded and a higher value is considered to represent better performance for a tire application.

Observation of the physical properties of the rubber composites demonstrate that lower tangent delta at high temperatures (100°C) predicts cooler running properties for a tire with a tread of the rubber composition and, thus, enhancing an improved rolling resistance and, also, that resistance to cut initiation and cut propagation is significantly better (belt flex test) for better groove cracking resistance.

The contribution of the styrene content for the solution S-SBR rubber is considered to be important for enhancing for high treadwear and low heat generation for a tire tread.

Also, the contribution of the requirement for the Tg of the S-IBR copolymer is considered to be important for tire tread flex resistance and low heat generation (properties).

### EXAMPLE VI

A pneumatic rubber tire was (is) prepared having a rubber tread composed of the rubber composition of Experiment D. The tire (Exp D) was observed to have properties, as compared to values for the Exp G Control which had been normalized to values of 100, as shown in the following Table 6. The Exp G tire had a tread of the composition of Experiment E.

**Table 6**

| Property | Tire | |
|---|---|---|
| | Exp G (Control) | Exp D |
| Rolling Resistance | 100 | 103 |
| Treadwear | 100 | 140 |
| Rib Tear/Groove Cracking | 100 | 200 |

The rib tear/groove cracking is a visually observed aspect of the tire tread after the tire is mounted on a rim, inflated and mounted on a truck axle and run over selected curbstones under selected test conditions. A higher value is considered to be better for tire tread applications.

Thus, the utilization of the S-IBR/S-SBR rubber blend is considered to be beneficial because of the observed benefits of proving good tire treadwear and durability.

While certain representative embodiments and details have been shown for the purpose of illustrating the invention, it will be apparent to those skilled in this art that various changes and modifications may be made therein without departing from the spirit or scope of the invention.

## Claims

1. A pneumatic rubber tire characterized by having a rubber tread where said tread rubber is comprised of, based on 100 parts by weight of the tread rubber, (A) about 20 to about 70 parts by weight isoprene/butadiene copolymer rubber (S-IBR) having an isoprene content of about 40 to about 60 percent, (B) about 10 to about 80 parts by weight cis 1,4-polyisoprene rubber, and (C) up to about 30 parts by weight of an organic solution prepared styrene/butadiene copolymer rubber (S-SBR) wherein the isoprene/butadiene copolymer rubber is characterized by having a Tg in a range of about -60°C to about -90°C and, further, by its butadiene component having a vinyl content in a range of about 1 to about 10 percent based on the butadiene and the isoprene component having a 3,4-content of about 1 to about 10 percent based on the isoprene.

2. The tire of claim 1 characterized in that said cis 1,4-polyisoprene rubber is natural rubber.

3. The tire of claim 1 characterized in that the tread rubber is comprised of, based on 100 parts by weight rubber, (A) about 20 to about 40 parts by weight of the said S-IBR, and (B) about 60 to about 80 parts by weight of cis 1,4-polyisoprene natural rubber.

4. The tire of claim 1 characterized in that the tread rubber is comprised of, based on 100 parts by weight rubber, (A) about 40 to about 70 parts by weight of said S-IBR, (B) about 10 to about 40 parts by weight cis 1,4-polyisoprene natural rubber, and (C) about 20 to about 30 parts by weight of said S-SBR.
